# FASCICULE DE BREVET EUROPEEN

(11) **EP 0 847 785 B1**
(45) Date de publication et mention de la délivrance du brevet: **26.05.2004**
(21) Numéro de dépôt: 97402982.9
(22) Date de dépôt: 10.12.1997
(51) Int. Cl.: B01D 39/08, B01D 39/00, B01J 20/28

(54) **Dispositif avec élément de filtration pour la purification d'eau faiblement chargée**
Vorrichtung mit Filterelement zur Reinigung von leicht belastetem Wasser
Device with filtering element for cleaning slightly contaminated water

(30) Priorité: 12.12.1996 FR 9615293
(43) Date de publication de la demande: 17.06.1998
(73) Titulaire: TotalFinaElf France, 92400 Courbevoie (FR); Ahlstrom Industries SA, 94400 Vitry sur Seine Cedex (FR)
(72) Inventeur: Navarre, François-Pierre, 69260 Charbonnière Les Bains (FR); Bossand, Bernand, 69360 Communay (FR); Girard, Pierre, 38330 Saint Ismier (FR); Dussaud, Joseph, 38780 Pont-Evêque (FR)
(74) Mandataire: Jolly, Jean-Pierre

(56) Documents cités:
- WO-A-95/18265
- FR-A- 2 199 479
- GB-A- 2 043 734
- US-A- 3 791 527
- PATENT ABSTRACTS OF JAPAN vol. 97, no. 2, 28 février 1997 & JP 08 266846 A (TSUCHIYA MFG. CO. LTD.), 15 octobre 1996, -& DATABASE WPI Section Ch, Week 9651 Derwent Publications Ltd., London, GB; Class D22, AN 96-513160 XP002060264 & JP 08 266 846 (TSUCHIYA SEISAKUSHO K.K.) , 15 octobre 1996
- PATENT ABSTRACTS OF JAPAN vol. 10, no. 148 (C-350), 29 mai 1986 & JP 61 008102 A (ASAHI KASEI KOGYO K.K.), 14 janvier 1986, -& DATABASE WPI Section Ch, Week 8608 Derwent Publications Ltd., London, GB; Class A14, AN 86-053309 XP002060265 & JP 61 008 102 (ASAHI CHEM. IND. CO. LTD.) , 14 janvier 1986

## Description

### DOMAINE TECHNIQUE

La présente invention concerne un dispositif pour purifier les eaux faiblement chargées contenant en suspension des particules minérales et/ou de matière organiques et/ou des hydrocarbures et/ou des micro-organismes.

Elle trouve son application dans toutes les industries consommatrices d'eau et notamment les industries de production et de traitement du pétrole brut, les industries chimiques, pétrochimiques, papetière et agro-alimentaires.

Elle trouve également son application pour la purification des eaux de rivières, de lagunes, de nappes phréatiques et des eaux de mer.

### ETAT DE LA TECHNIQUE ANTERIEURE

Un dispositif de filtration est décrit dans le brevet US 3,791,527. Ce dispositif comporte, un filtre à tambour rotatif, perforé placé dans un réservoir contenant une suspension à filtrer, une feuille de papier filtrant renouvelée continûment, enroulée partiellement autour du tambour. De plus une toile plastique sans fin est disposée entre cette feuille et la surface du tambour perforé.

L'intérieur du tambour est maintenu en dépression, ce qui a pour effet d'aspirer le liquide à travers les perforations du tambour. Les particules venant se déposer à la surface du papier.

Avec ce dispositif la vitesse de passage du liquide est faible et le papier se colmate très rapidement, ce qui conduit à utiliser une surface de papier importante pour traiter une quantité de liquide à filtrer donnée dans un temps donné.

Le papier présente une résistance mécanique faible, notamment lorsqu'il est humide, ce qui limite les possibilités de traction pour assurer son déroulement continu dans les filtres à défilement de l'élément de filtration.

Le papier constitué essentiellement par des fibres naturelles ou synthétiques présente des capacités d'absorption faibles et des caractéristiques qui ne sont pas adaptées à la filtration d'une large gamme de suspensions.

### EXPOSE DE L'INVENTION

La présente invention a justement pour objet de remédier à ces inconvénients, et de fournir un dispositif pour purifier notamment les eaux faiblement chargées contenant en suspension des particules minérales et/ou des matières organiques et/ou des hydrocarbures et/ou des micro-organismes par exemple des virus, des microbes, des bactéries, des algues, des levures, du plancton.

D'une façon générale le dispositif de l'invention est particulièrement bien adapté pour purifier des eaux contenant moins de 100 mg/litre de matières et/ou micro-organismes en suspension.

Grâce au dispositif de l'invention cette quantité est ramenée à moins de 3 mg/litre, dans l'eau obtenue après purification.

De plus la vitesse de passage de l'eau dans le dispositif est élevée, la vitesse de colmatage est faible et les capacités d'absorption des matières liquides organiques sont très importantes.

Le dispositif de l'invention trouve son application notamment dans les raffineries de pétrole et les plates-formes de production de pétrole, pour la purification des eaux usées en vue de leur recyclage, qui implique l'usage d'eau de grande pureté, de façon à protéger les équipements vis-à-vis de la corrosion ou de l'usure anormale.

Pour les plates-formes de production de pétrole, le recyclage des eaux de gisement exige une qualité d'eau pure dont la taille limite des matières en suspension ne dépasse pas 2 microns. Pour les rejets dans le milieu naturel, la teneur en hydrocarbures recherchée est la plus faible possible.

Des caractéristiques semblables sont exigées dans la plupart des industries.

A cette fin, la présente invention propose un dispositif de purification d'eau faiblement chargée contenant en suspension des particules minérales et/ou de matières organiques et/ou des hydrocarbures et/ou des micro-organismes, ce dispositif comportant une grille qui supporte une toile sur laquelle est disposé un élément de filtration, des moyens de réception de l'eau après passage de celle-ci au travers dudit élément de filtration, caractérisé en ce que l'élément de filtration est constitué de trois feuilles de papier superposées, respectivement une première feuille, une deuxième feuille et une troisième feuille, la première, en contact avec la toile de filtration, étant chargée avec une poudre ayant une granulométrie comprise entre 1 et 5 microns, la deuxième avec une poudre ayant une granulométrie comprise entre 5 et 30 microns et la troisième avec une poudre ayant une granulométrie comprise entre 50 et 150 microns.

On connaît certes, par FR-A-2 199 479, un matériau pour le traitement de fluides, constitué de couches multiples d'une matière fibreuse, dans les interstices de laquelle sont disséminés un ou plusieurs agents actifs, ayant pour but de retenir les substances à éliminer du fluide traité. Ces agents actifs sont emprisonnés entre les fibres et présentent une certaine liberté de mouvement, de sorte que le matériau proposé se comporte comme une "suspension" d'agent actif au sein de la matière fibreuse (voir page 2, lignes 20 à 27 de ce document).

Selon une autre caractéristique de l'invention, la feuille de papier est composée de 50 à 70 % de cellulose, de 10 à 20 % de fibres synthétiques et d'au moins un liant.

Selon une autre caractéristique de l'invention, l'élément de filtration contient en outre des résines qui améliorent sa résistance mécanique, à l'état humide.

Selon une autre caractéristique de l'invention, l'élément de filtration a subi préalablement un traitement pour le rendre oléophile.

Selon une autre caractéristique de l'invention, l'élément de filtration a subi préalablement un traitement de sulfinisation pour le rendre oléophobe.

Selon une autre caractéristique de l'invention, l'élément de filtration a subi préalablement un traitement pour le rendre ignifuge.

Selon une autre caractéristique de l'invention, l'élément de filtration a subi préalablement un traitement avec un acide ayant servi dans une unité d'alkylation d'hydrocarbures.

Selon une autre caractéristique de l'invention, l'élément de filtration contient en outre des fibrilles qui améliorent sa résistance mécanique.

Selon une autre caractéristique de l'invention, l'élément de filtration contient en outre au moins une poudre conductrice de l'électricité, pour faciliter l'élimination des charges électriques.

### BREVE DESCRIPTION DES DESSINS

D'autres caractéristiques et avantages de la présente invention apparaîtront plus clairement à la lecture de la description ci-après faite en référence aux dessins annexés dans lesquels :
- la figure 1 : représente schématiquement un dispositif de purification d'eau faiblement chargée.
- la figure 2 représente schématiquement un mode particulier de réalisation du dispositif de l'invention comportant un tambour rotatif.

### EXPOSE DETAILLE DE L'INVENTION

Parmi les eaux qui sont récupérées dans les usines consommatrices d'eau ou les installations de traitement d'eaux ou dans le milieu naturel, on peut citer les eaux de gisements, les eaux de production, les eaux issues de dessalage, les eaux usées de plates-formes habitées, les eaux de mer et de lagunes, les eaux des bassins d'orage, les eaux pluviales, les eaux des cours d'eau chargées, les eaux brutes des villes après dégrillage, les eaux chargées des bassins biologiques et des effluents de bassins des usines de traitement d'eau, les rejets des industries textiles, papetières, chimiques, agro-alimentaires (abattoirs, laiteries, conserveries), les eaux contenant des fluides d'usinages.

Toutes ces eaux ont en commun une faible teneur en particules dont certaines ont une granulométrie très faible comprise entre 0,1 et 20 microns. L'objectif de l'invention est de disposer d'une eau dont la teneur en matières en suspension est inférieure à 3 mg par litre, le diamètre des particules étant inférieur à 2 microns et dont la teneur en matières organiques est inférieure à 0,1 mg par litre pour des débits de l'ordre de 40 000 m³ par jour dans une papeterie et d'environ 15 000 m³ par jour dans une raffinerie de pétrole

En outre ces eaux peuvent contenir des matières qui présentent des propriétés colmatantes et/ou une consistance semi-pâteuse. C'est le cas par exemple des eaux contenant des micro-organismes tels que du plancton, des levures, des algues dont les dimensions sont comprises entre 1 et 100 microns.

Ces eaux peuvent également contenir en suspension des micelles d'hydrocarbures qui se présentent sous forme de fines gouttes de 2 à 250 microns et notamment de 10 à 50 microns. Ces gouttes peuvent également contenir des micelles d'eau.

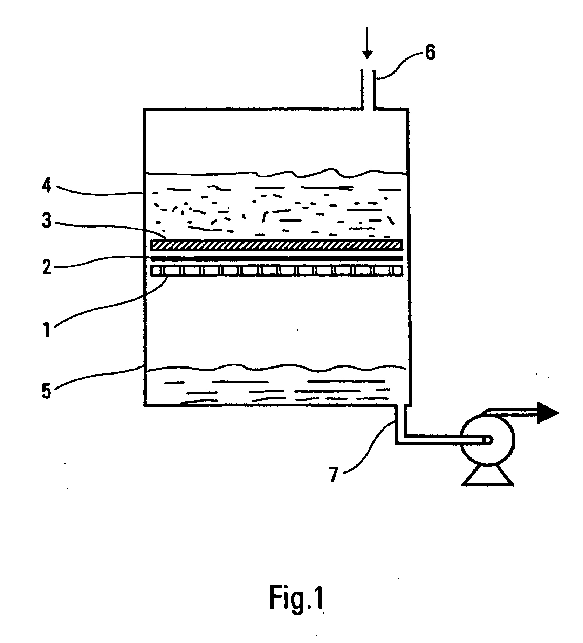

A cette fin, le dispositif de l'invention, selon le mode particulier de réalisation représenté schématiquement sur la figure 1, comporte :
- une grille 1, supportant une toile 2, sur laquelle est disposé un élément 3 de filtration, constitué de trois feuilles de papier chargée en poudres organiques ou minérales,
- un bassin 4 de mise en contact de l'eau faiblement chargée à purifier avec l'élément 3 de filtration, afin que cette eau traverse l'élément 3,
- une partie 5 du bassin 4, destinée à la réception de l'eau filtrée,
- des moyens 6 d'alimentation du bassin 4 en eau à traiter,
- des moyens 7 de récupération de l'eau traitée.

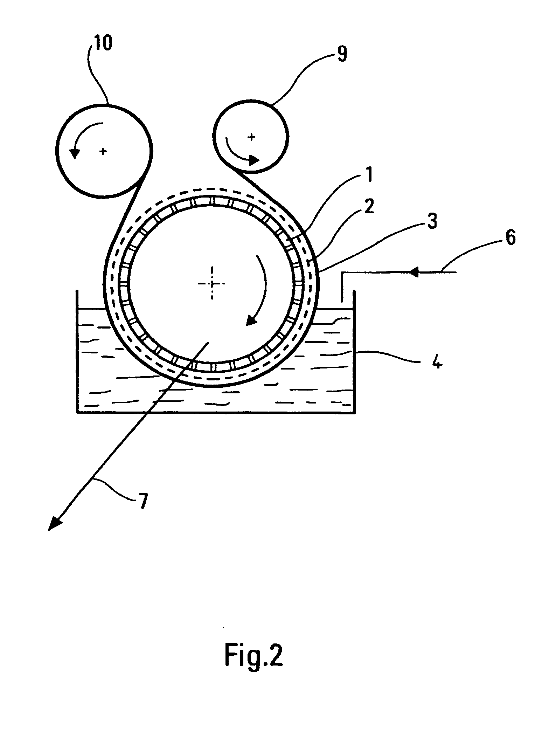

Dans la réalisation de la figure 2, on retrouve :
- un bassin 4 contenant une eau faiblement chargée à purifier,
- des moyens 6 d'alimentation en eau du bassin 4,
- un tambour perforé rotatif, en résine époxy, constituant ici la grille 1,
- une toile 2 en fibres de polyester recouvrant la paroi extérieure du tambour,
- un élément 3 de filtration constitué d'une feuille de papier, chargée en poudre organique et/ou minérale,
- un rouleau 9 d'alimentation en élément 3 de filtration,
- un rouleau 10 de récupération de l'élément 3 de filtration chargé de matières en suspension dans l'eau à purifier,
- des moyens 7 de récupération de l'eau ayant traversé l'élément de filtration 3.

Le dispositif peut aussi comporter, non représentés, des moyens de mise sous vide de la partie intérieure du tambour 1.

L'eau faiblement chargée, contenant en suspension des particules minérales, par exemple des grains de silice, des matières organiques, par exemple des graisses animales et/ou végétales, des hydrocarbures, des micro-organismes, par exemple du plancton, des bactéries, des virus, des levures, des algues, arrive dans le bassin 4, par les moyens 6 d'alimentation, qui peuvent comporter un dispositif de régulation du niveau d'eau dans le bassin 4.

Sous l'effet d'une différence de pression entre l'intérieur du tambour perforé formant grille 1 et la face extérieure de l'élément 3 de filtration, l'eau traverse l'élément de filtration sur lequel les matières en suspension sont retenues et l'eau purifiée s'écoule à l'intérieur du tambour d'où elle est évacuée par les moyens 7.

Un des principaux avantages de l'invention est de pouvoir choisir la ou les poudres de charge, les mieux adaptées aux matières en suspension dans l'eau qui présentent des caractéristiques extrêmement diverses selon l'origine de l'eau qui les contient. On pourra mieux apprécier cet avantage de l'invention à la lecture des exemples qui suivront.

Un autre avantage de l'utilisation d'un élément 3 de filtration à base de papier chargé en poudre organiques et/ou minérales est l'amélioration des caractéristiques de l'élément de filtration.

On trouvera ci-après à titre d'exemple non limitatif un tableau de comparaison des caractéristiques de feuilles de papiers chargées de matière végétale, avec celles d'un papier non chargé, fabriqué à partir de fibres de récupération.

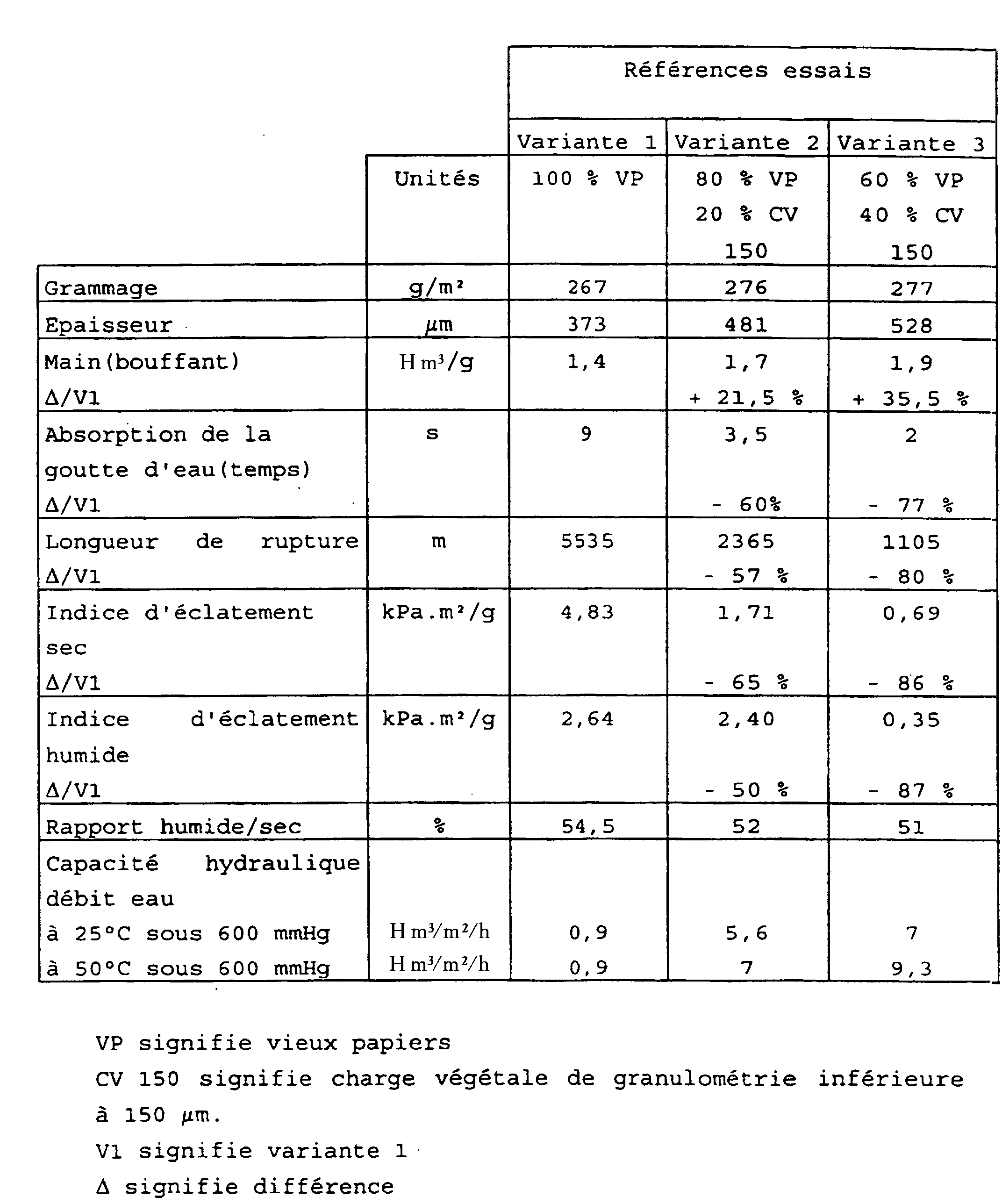

Le fait d'obtenir de telles caractéristiques de l'élément de filtration, fabriqué à partir de matériaux bon marché tel que du papier de récupération et une charge végétale rendent le dispositif de l'invention particulièrement économique.

Comme on peut le voir sur le tableau ci-dessus le grammage du papier n'est pas affecté par l'adjonction de poudre végétale. Le bouffant du papier chargé, défini par le rapport entre l'épaisseur et le grammage est supérieur à celui du papier non chargé. La diminution de la valeur du paramètre qui caractérise l'absorption de la goutte d'eau montre que la charge en poudre organique rend le papier hydrophile. La longueur de rupture et l'indice de rupture se dégradent avec l'augmentation de la charge en poudre organique, tout en conservant des valeurs acceptables pour les applications envisagées. La capacité hydraulique qui caractérise la vitesse de passage du filtrat au travers du papier est très fortement augmentée par l'adjonction de poudre organique. Dans le cas du papier chargé avec 40% de poudre végétale la capacité hydraulique est dix fois supérieure à celle obtenue avec du papier non chargé. Un résultat aussi remarquable était inattendu

La résistance mécanique de l'élément de filtration peut être améliorée en lui incorporant des résines, à base par exemple d'urée-formol, de mélamine formol ou d'épichlorhydrine. Cette caractéristique trouve tout son intérêt dans les dispositifs dans lesquels l'élément de filtration est soumis à une tension mécanique importante pour assurer son défilement continu.

Grâce au dispositif de l'invention on peut adapter les caractéristiques de l'élément de filtration pour le rendre plus ou moins oléophile et/ou hydrophile et/ou ignifuge en lui faisant subir un traitement adapté.

Par exemple un traitement à l'acide rend l'élément de filtration oléophobe c'est à dire résistant à l'eau et peu poreux.

Cette caractéristique est encore améliorée si on utilise un acide ayant servi dans une unité de d'alkylation d'hydrocarbures, grâce aux hydrocarbures associés à l'acide proprement dit, qui sont adsorbés par les poudres et les fibres.

Selon une autre caractéristique du dispositif, l'élément de filtration contient, en plus des fibres du papier et des poudres, des fibrilles qui ont pour effet d'améliorer sa flexibilité et sa compressibilité ainsi l'élément de filtration résiste mieux aux variations de pression et débit de l'eau à purifier.

Les proportions respectives des fibres du papier, poudres et fibrilles sont choisies expérimentalement pour obtenir les caractéristiques les mieux adaptées à l'eau à purifier.

Selon une autre caractéristique du dispositif de l'invention l'élément de filtration contient une poudre conductrice de l'électricité, par exemple un sel métallique conducteur, qui permet d'éliminer l'électricité statique qui se forme par frottement au cours des opérations de sa manipulation, notamment dans les dispositifs où l'élément de filtration se présente en rouleaux.

Cet aspect sécurité est particulièrement recherché dans les industries où des étincelles peuvent provoquer des explosions du fait de la présence de produits inflammables dans l'atmosphère. C'est le cas des eaux chargées en hydrocarbures.

L'élimination des charges électriques statiques facilite aussi le déroulement des rouleaux d'élément de filtration.

L'utilisation d'un élément de filtration chargé en poudre conductrice évite l'installation de moyens d'élimination des charges électriques statiques, comme par exemple des sabots et des balais conducteurs ou le mouillage à l'eau de l'élément de filtration à la sortie de la bobine et dans tous les cas la poudre est humidifiée avant son utilisation sur la machine.

### EXEMPLE 1

Le dispositif de l'invention est destiné à la purification d'une eau faiblement chargée qui est l'effluent ultime d'une papeterie.

Après purification l'eau obtenue, constitue la charge d'une station biologique de traitement d'eau.

L'eau à purifier présente les caractéristiques suivantes :
- légère odeur nauséabonde
- couleur grise
- densité voisine de 1
- viscosité à 40° C : 10 centipoises
- teneur en matières solides en suspension environ 1g par litre
- dimensions des particules 3 à 100 µm
- demande chimique en oxygène : 270 mg/litre
- demande biologique en oxygène : 76 mg/litre

Le filtre utilisé dans cet exemple est un filtre à déroulement de papier, comprenant une grille transporteuse, un rouleau d'élément de filtration vierge de 90 cm de largeur, une bobine de récupération de l'élément de filtration chargé en impuretés, une pompe à vide et une pompe de reprise du filtrat. L'eau à purifier est introduite par la partie supérieure de cet ensemble.

L'élément de filtration utilisé est un papier réalisé à partir de vieux papiers et chargé d'une poudre d'épicéa. Il comprend 70% de fibres récupérées et 30% de poudre ayant une granulométrie comprise entre 10 et 150 µm, ses caractéristiques sont les suivantes :
- grammage : 200 g/m²
- épaisseur : 500 µm
- longueur de rupture : 1800 m
- indice d'éclatement sec : 1,2 kPa.m²/g

Les particules de matières cellulosiques et minérales en suspension dans l'eau à purifier se fixent sur le papier chargé.

La couche ainsi formée reste poreuse. On peut traiter ainsi jusqu'à 3 m3 d'eau par heure et par m² de papier chargé à une température d'environ 20° C,.

Le filtrat obtenu est une eau incolore, limpide et sans odeur. La teneur en matières en suspension déterminée par méthode décrite dans la norme NFT 90202 est nulle. La demande chimique un oxygène est de 120 mg/litre, et la demande biologique en oxygène de 18 mg/litre.

L'eau obtenue grâce au dispositif de l'invention est stable et présente toutes les qualités d'une eau recyclable.

Dans notre exemple la papeterie produit annuellement 43 000 t de papier, et nécessite le traitement de 1 290 000 m³ d'eau par an.

La consommation de papier chargé est de 50 m²/heure.

La quantité de matières en suspension est d'environ 28 000 t/an.

Le papier chargé est recyclé pour la fabrication de carton ou d'un papier chargé destiné à la purification d'eau.

L'énergie électrique consommée est d'environ 1 kW.heure par mètre cube d'eau purifiée, d'où l'intérêt économique du dispositif du point de vue énergétique.

### EXEMPLE 2

Les eaux ayant servi au fonctionnement d'unités de traitement du pétrole brut, doivent satisfaire à des normes de rejet. Pour cela elles sont généralement traitées notamment dans des bassins biologiques qui ont pour objectif de réduire les charges biologiques, qui sont caractérisées par leur demande chimique en oxygène (DCO) et leur demande biologique en oxygène (DBO). Malgré ce traitement complété, par une opération de décantation l'eau ne peut être rejetée directement dans le milieu naturel. Elle doit être diluée avec d'autres effluents moins chargés mais la quantité de matière en suspension rejetée est toujours la même.

Le dispositif de l'invention pour traiter cette eau comporte un filtre à bande, fonctionnant sous vide, avec un élément de filtration constitué par du papier chargé dont la composition est la suivante :
- fibres cellulosique recyclées : 60 % poids
- la poudre organique est de la poudre d'épicéa : 39 % poids
- l'additif est de l'épichlorhydrine : 1 % poids

La granulométrie de la poudre d'épicéa est comprise entre 5 et 150 microns.

Les caractéristiques du papier sont les suivantes :
- grammage : 277 g/m²
- épaisseur : 528 µm
- bouffant : 1,9 µm³/g
- absorption de la goutte d'eau : 2 s
- longueur de rupture : 1 105 m
- indice d'éclatement à sec : 0,69 kPa.m²/g
- indice d'éclatement humide : 0,35 kPa.m²/g
- capacité hydraulique à 25°C : 7 m³/m²/h

Le papier chargé se déroule et traverse plusieurs caissons à vide en se chargeant en matières en suspension et micropolluants.

Le filtrat est clair, limpide et sans odeur.

Le tableau ci-après indique les caractéristiques de l'eau à purifier, celles de l'eau obtenue au moyen du dispositif de l'invention et les rendements de purification.

| Caractéristiques de l'eau | | | Rendements de purification en % |
|---|---|---|---|
| | Avant purification | Après purification | |
| pH à 20°C | | 6,8 | |
| Demande chimique en oxygène / | 147 mg/l | 107 mg/l | 27 |
| Demande biochimique en oxygène* | 40 mg/l | 6 mg/l | 85 |
| Matières en suspension totales | 64 mg/l | 4 mg/l | 93 |
| Hydrocarbures totaux | 0,94 mg/kg | <0,2 mg/kg | 78 |
| Indice de phénol après distillation | 0,026 mg/l | 0,017 mg/l | 34 |

| | | | |
|---|---|---|---|
| * DBO en 5 jours en mg/l de O₂ | | | |

La vitesse de traitement est de 7 m³ d'eau chargée par heure et par m² de papier chargé.

On constate que le papier chargé ne se colmate pas et que les bactéries dont la granulométrie va de 1 à 10 microns sont retenues sur le papier chargé sans que la vitesse de passage soit sensiblement modifiée.

Le filtrat obtenu avec le dispositif de l'invention est une eau qui présente des caractéristiques acceptables pour être rejetées dans le milieu naturel.

La consommation électrique est de 0,8 kW.heure par tonne d'eau purifiée.

Pour une charge annuelle de 513 000 t d'eau ou récupère 480 000 t d'eau purifiée. La perte est donc de 33 000 t seulement.

## Revendications

1. Dispositif de purification d'eau faiblement chargée contenant en suspension des particules minérales et/ou de matières organiques et/ou des hydrocarbures et/ou des micro-organismes, ce dispositif comportant une grille (1) qui supporte une toile (2) sur laquelle est disposé un élément (3) de filtration, des moyens (5) de réception de l'eau après passage de celle-ci au travers dudit élément (3) de filtration, **caractérisé en ce que** l'élément (3) de filtration est constitué de trois feuilles de papier superposées, respectivement une première feuille, une deuxième feuille et une troisième feuille, la première, en contact avec la toile de filtration, étant chargée avec une poudre ayant une granulométrie comprise entre 1 et 5 microns, la deuxième avec une poudre ayant une granulométrie comprise entre 5 et 30 microns et la troisième avec une poudre ayant une granulométrie comprise entre 50 et 150 microns.

2. Dispositif selon la revendication 1, **caractérisé en ce que** les feuilles de papier sont composées de 50 à 70 % de cellulose, de 10 à 20 % de fibres synthétiques et d'au moins un liant.

3. Dispositif selon l'une des revendications 1 ou 2, **caractérisé en ce que** l'élément (3) de filtration contient en outre des résines qui améliorent la résistance mécanique à l'état humide.

4. Dispositif selon l'une quelconque des revendications 1 à 3, **caractérisé en ce que** l'élément (3) de filtration a subi préalablement un traitement pour le rendre oléophile.

5. Dispositif selon l'une quelconque des revendications 1 à 3, **caractérisé en ce que** l'élément (3) de filtration a subi préalablement un traitement de sulfurisation pour le rendre oléophobe.

6. Dispositif selon l'une quelconque des revendications 1 à 5, **caractérisé en ce que** l'élément (3) de filtration a subi préalablement un traitement pour le rendre ignifuge.

7. Dispositif selon l'une des revendications 1 à 3 et 6, **caractérisé en ce que** l'élément (3) de filtration a subi préalablement un traitement avec un acide.

8. Dispositif selon l'une quelconque des revendications 1 à 7, **caractérisé en ce que** l'élément (3) de filtration contient en outre des fibrilles, qui améliorent sa résistance mécanique.

9. Dispositif selon l'une des revendications 1 à 8, **caractérisé en ce que** l'élément (3) de filtration contient en outre au moins une poudre conductrice de l'électricité, pour faciliter l'élimination des charges d'électricité statique.

## Claims

1. A device for purifying slightly contaminated water containing suspended inorganic particles and/or organic matter and/or hydrocarbons and/or microorganisms, said device comprising a screen (1) which supports a cloth (2) on which is arranged a filter element (3), means (5) for receiving the water once it has passed through said filter element (3), **characterised in that** the filter element (3) comprises three superposed sheets of paper, respectively a first sheet, a second sheet and a third sheet, the first, in contact with the filter cloth, being filled a powder having a grain size of between 1 and 5 microns, the second with a powder having a grain size of between 5 and 30 microns and the third with a powder having a grain size of between 50 and 150 microns.

2. A device according to claim 1, **characterised in that** the sheets of paper are composed of 50 to 70% cellulose, 10 to 20% synthetic fibres and at least one binder.

3. A device according to one of claims 1 or 2, **characterised in that** the filter element (3) furthermore contains resins which improve mechanical strength when wet.

4. A device according to any one of claims 1 to 3, **characterised in that** the filter element (3) has previously been subjected to a treatment to render it oleophilic.

5. A device according to any one of claims 1 to 3, **characterised in that** the filter element (3) has previously been subjected to a sulfurisation treatment to render it oleophobic.

6. A device according to any one of claims 1 to 5, **characterised in that** the filter element (3) has previously been subjected to a treatment to render it fire-resistant.

7. A device according to any one of claims 1 to 3 and 6, **characterised in that** the filter element (3) has previously been subjected to treatment with an acid.

8. A device according to any one of claims 1 to 7, **characterised in that** the filter element (3) furthermore contains fibrils which improve its mechanical strength.

9. A device according to any one of claims 1 to 8, **characterised in that** the filter element (3) furthermore contains at least one electrically conductive powder in order to facilitate the dissipation of static electricity charges.

## Patentansprüche

1. Vorrichtung zur Reinigung von leicht belastetem Wasser, das in Suspension Mineralpartikel und/oder organische Materialien und/oder Kohlenwasserstoffe und/oder Mikroorganismen enthält, wobei die Vorrichtung ein Gitter (1), das ein Gewebe (2) trägt, auf dem ein Filtrierelement (3) vorgesehen ist, und Mittel (5) zum Aufnehmen des Wassers nach dessen Durchtritt durch das besagte Filtrierelement (3) umfaßt, **dadurch gekennzeichnet, daß** das Filtrierelement (3) aus drei übereinandergelegten Papierblätter von jeweils einem ersten Blatt, einem zweiten Blatt und einem dritten Blatt aufgebaut ist, wobei das Erste, das sich in Kontakt mit dem Filtriergewebe befindet, mit einem Pulver beladen ist, das eine Kornklassierung von 1 bis 5 Mikron aufweist, das Zweite mit einem Pulver, das eine Kornklassierung von 5 bis 30 Mikron aufweist, und das Dritte mit einem Pulver, das eine Kornklassierung von 50 bis 150 Mikron aufweist.

2. Vorrichtung gemäß Anspruch 1, **dadurch gekennzeichnet, daß** die Papierblätter aus 50 bis 70% Cellulose, 10 bis 20% synthetischen Fasern und mindestens einem Bindemittel zusammengesetzt sind.

3. Vorrichtung gemäß einem der Ansprüche 1 oder 2, **dadurch gekennzeichnet, daß** das Filtrierelement (3) ferner Harze enthält, die die mechanische Beständigkeit unter feuchtem Zustand verbessern.

4. Vorrichtung gemäß irgendeinem der Ansprüche 1 bis 3, **dadurch gekennzeichnet, daß** das Filtrierelement (3) zuvor einer Behandlung unterzogen wurde, um es oleophil zu machen.

5. Vorrichtung gemäß irgendeinem der Ansprüche 1 bis 3, **dadurch gekennzeichnet, daß** das Filtrierelement (3) zuvor einer Schwefelbehandlung unterzogen wurde, um es oleophob zu machen.

6. Vorrichtung gemäß irgendeinem der Ansprüche 1 bis 5, **dadurch gekennzeichnet, daß** das Filtrierelement (3) zuvor einer Behandlung unterzogen wurde, um es flammbeständig zu machen.

7. Vorrichtung gemäß einem der Ansprüche 1 bis 3 und 6, **dadurch gekennzeichnet, daß** das Filtrierelement (3) zuvor einer Behandlung mit einer Säure unterzogen wurde.

8. Vorrichtung gemäß irgendeinem der Ansprüche 1 bis 7, **dadurch gekennzeichnet, daß** das Filtrierelement (3) ferner Fäserchen enthält, die seine mechanische Beständigkeit verbessern.

9. Vorrichtung gemäß einem der Ansprüche 1 bis 8, **dadurch gekennzeichnet, daß** das Filtrierelement (3) ferner mindestens ein elektrisch leitendes Pulver enthält, um die Beseitigung von elektrostatischen Ladungen zu erleichtern.
